# EUROPEAN PATENT SPECIFICATION

(11) **EP 3 435 002 B1**
(45) Date of publication and mention of the grant of the patent: **10.03.2021**
(21) Application number: 17770140.6
(22) Date of filing: 17.03.2017
(51) Int. Cl.: F25B 39/02, B60H 1/32, F28D 1/053, F28D 20/02, F28D 1/03, F28D 20/00, F28D 21/00, F28F 1/02

(54) **EVAPORATOR FOR VEHICULAR AIR CONDITIONING DEVICE**
VERDAMPFER FÜR EINE FAHRZEUGKLIMATISIERUNGSVORRICHTUNG
ÉVAPORATEUR POUR DISPOSITIF DE CLIMATISATION DE VÉHICULE

(30) Priority: 24.03.2016 JP 2016060408
(43) Date of publication of application: 30.01.2019
(73) Proprietor: Valeo Japan Co., Ltd., Saitama 360-0193 (JP)
(72) Inventor: NOGUCHI, Yutaka, Kumagaya-shi Saitama 360-0193 (JP)
(74) Representative: Tran, Chi-Hai
(86) International application number: PCT/JP2017/010837
(87) International publication number: WO 2017/164098

(56) References cited:
- CN-Y- 201 203 314
- JP-A- 2010 234 974
- JP-A- 2010 234 974
- JP-A- 2014 034 037
- JP-A- 2014 034 037
- JP-A- 2015 110 412
- JP-A- 2015 110 412
- US-A- 6 101 830
- US-A1- 2011 239 696
- US-A1- 2014 124 161
- US-A1- 2014 174 121

## Description

### Technical Field

The present invention relates to an evaporator for a vehicular air conditioning device, the evaporator including a heat storage material container.

### Background Art

There has been a refrigerating cycle in which a compressor is driven by using driving force of an engine, a refrigerant of the refrigerating cycle flows to an evaporator and air to be blown into a vehicle interior is cooled. Further, there also has been a vehicle which includes an idling stop mechanism that temporarily stops driving of the engine when the vehicle is stopped in order to improve fuel consumption. When the engine is temporarily stopped by the idling stop mechanism, driving of the compressor is also temporarily stopped, and thus the vehicle interior cannot be cooled. Therefore, there has been proposed a technique in which, an evaporator which includes a heat storage material (cold storage material) described in Patent Literature 1 is used, for example, in a refrigerating cycle, so that even if circulation of the refrigerant is temporarily stopped, the air to be blown into the vehicle interior can be cooled continuously.

As shown in Fig. 3 (in Fig. 24 of Patent Literature 1), a cold storage heat exchanger in Patent Literature 1 includes a large number of tubes 111 in which the refrigerant flows, a large number of fins 112 which are separately arranged between the tubes, a tank which distributes the refrigerant to the tubes, and a tank which collects the refrigerant passing through the tubes. Further, heat storage material containers 120 which contains the heat storage material (cold storage material) are arranged at predetermined positions of the large number of stacked fins. Thus, when the refrigerant of the refrigerating cycle is circulated, the heat storage material is cooled by the tube. Further, when the circulation of the refrigerant of the refrigerating cycle is temporarily stopped, heat (cold) of the heat storage material which is cooled is transferred to the fins via the tubes, so that the air to be blown into the vehicle interior can be cooled continuously.

### Citation List

### Patent Literature

Patent Literature 1: JP-A-2011-01294" JP-A-2015110412 discloses another evaporator including heat storage material as defined in the preamble of claim 1.

### Summary of the Invention

### Technical Problem

However, a cold storage heat exchanger 100 in Patent Literature 1 is based on a configuration in which the tubes 111 and the outer fins 112 are alternately stacked, and the heat storage material containers 120 are arranged between the tubes 111 instead of the outer fins 112 in an undetachable manner. In this way, since a space for containing the heat storage material is provided as a part of the evaporator, a position of the heat storage material arranged in the evaporator cannot be changed.

Generally, an evaporator for a vehicular air conditioning device is disposed in an interior of a unit case. Here, a way in which the air flows in the interior of the unit case varies from vehicle to vehicle and from air conditioning device to air conditioning device. That is, a distribution of portions where a flow rate of air which passes through the evaporator is high and portions where a flow rate of air which passes through the evaporator is low varies from vehicle to vehicle and from air conditioning device to air conditioning device. Therefore, the heat storage material is provided at a position where the flow rate is high and when the refrigerant circulation is temporarily stopped, it is desired to prevent local temperature rise of the evaporator. However, if the space for containing the heat storage material is determined in advance, the position of the heat storage material and the position where the temperature rises locally are different, so that it is difficult to blow cooling air with a small temperature distribution.

Further, in order to improve productivity, evaporators having a certain specification are installed in various kinds of air conditioning devices. Accordingly, inconsistency between the position of the heat storage material and the position where the temperature rises locally is more likely to occur.

Meanwhile, apart from the ways in which air flows in the interior of the unit case, it has been known that portions where the temperature is easy to decrease and portions where difficult to decrease occur in the evaporator according to a way in which the refrigerant flows. This is a phenomenon that happens because, during a flow process in which the refrigerant flowing into the evaporator as a gas-liquid mixing state is gradually phase-changed to a gaseous state, a temperature of a position where the liquid refrigerant having a degree of overcooling flows, decreases easily than a position where the gaseous refrigerant having a degree of overheating flows. Further, since a circulation amount of the refrigerant and the gas-liquid mixing state of the refrigerant change according to an operation state of the refrigerating cycle such as a rotation speed of a compressor, heat dissipation conditions in a condenser, the temperature distribution in the evaporator changes. Therefore, it is desired to make the temperature distribution of the evaporator uniform.

Here, when the cold storage heat exchanger in the Patent Literature 1 is used, the heat storage material is cooled at the position where the temperature is easy to decrease and cools the position where the temperature is high (cools the flowing air), and thus it is expected to make the temperature distribution uniform. However, since the position of the heat storage material container 120 is fixed, it is difficult to properly arrange the heat storage material in response to the temperature distribution which changes according to the operating state of the refrigerating cycle.

An object of the present invention is to provide an evaporator for a vehicular air conditioning device, the evaporator including a heat storage material container, the evaporator allowing easy change of a position of a heat storage material in order to make a temperature distribution of the evaporator uniform.

### Solution to Problem

An evaporator (1) for a vehicular air conditioning device according to the present invention includes: an element unit (13) that has a plurality of tubes (11) and a plurality of outer fins (12) which are alternately stacked, and exchanges heat between a refrigerant and air; one tank portion (14) which is provided at one ends in a longitudinal direction of the tubes; another tank portion (15) which is provided at the other ends in the longitudinal direction of the tubes; and a heat storage material container (20) which is attached to the element unit along the longitudinal direction of the tubes, wherein the heat storage material container includes a heat storage material containing portion (21), a heat storage material (M) which is contained in the heat storage material containing portion, and an attachment portion (30) which attaches the heat storage material container to the element unit (claim 1).

In this manner, the heat storage material container that contains the heat storage material is attachable to the element unit of the evaporator by using the attachment portion. Thus, a position of the heat storage material can be easily changed.

In the evaporator for the vehicular air conditioning device according to the present invention, the heat storage material container is preferably attached on a downstream side of the element unit in a flow direction of the air (claim 2) . The heat storage material container and the heat storage material which is contained in the heat storage material container can be effectively cooled by the air which is cooled by the evaporator.

The evaporator of the vehicle air conditioning device according to the present invention is preferably attached on a downstream side of the tubes of the element unit in the flow direction of the air (claim 3). Since the heat storage material container is attached on the downstream side of the tubes, an increase in airflow resistance of the air which flows through the element unit can be prevented.

In the evaporator for the vehicular air conditioning device according to the present invention, the heat storage material containing portion and the attachment portion are preferably a material having higher corrosiveness than that of the element unit (claim 4). Condensed water is generated on the evaporator and the evaporator is required to have corrosion resistance. Since the heat storage material containing portion and the attachment portion are formed of the material having higher corrosiveness than that of the element unit of the evaporator, progress of corrosion of the element unit can be prevented by a sacrificial corrosion effect.

### Advantageous Effects of the Invention

According to the present invention, an evaporator for a vehicular air conditioning device can be provided, the evaporator including a heat storage material container, the evaporator allowing easy change of a position of a heat storage material.

### Brief Description of the Drawings

Figs. 1A and 1B show an evaporator according to an embodiment of the present invention, Fig. 1A is a schematic front view, and Fig. 1B is a schematic cross-sectional view taken along a line X-X in Fig. 1A.
Figs. 2A and 2B show a heat storage material container according to the embodiment of the present invention, Fig. 2A is a schematic cross-sectional view, and Fig. 2B shows a schematic side view of Fig. 2A when viewed from an arrow Y.

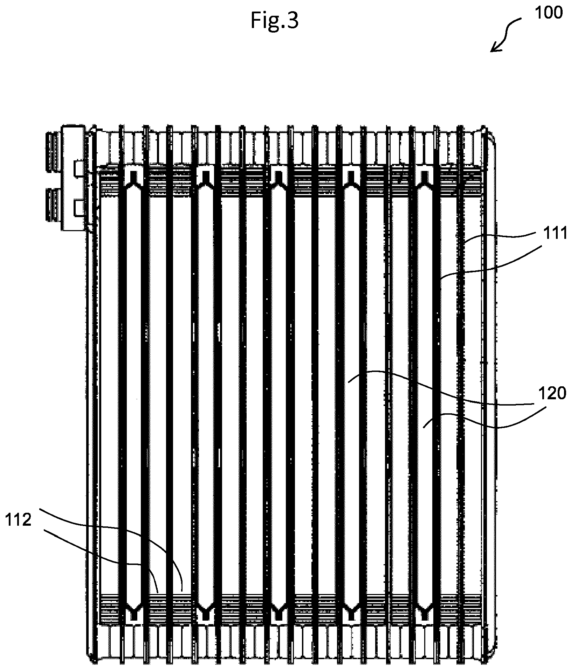

Fig. 3 is a schematic front view of an evaporator shown as conventional art.

### Description of Embodiments

Hereinafter, an aspect of the present invention will be described with reference to the attached drawings. Embodiments to be described hereinafter are examples of the present invention, and the present invention is not limited to the embodiments below. In the present specification and the drawings, constituent elements with the same reference numerals mutually indicate the same elements. Various modifications may be made as long as the effects of the present invention are achieved.

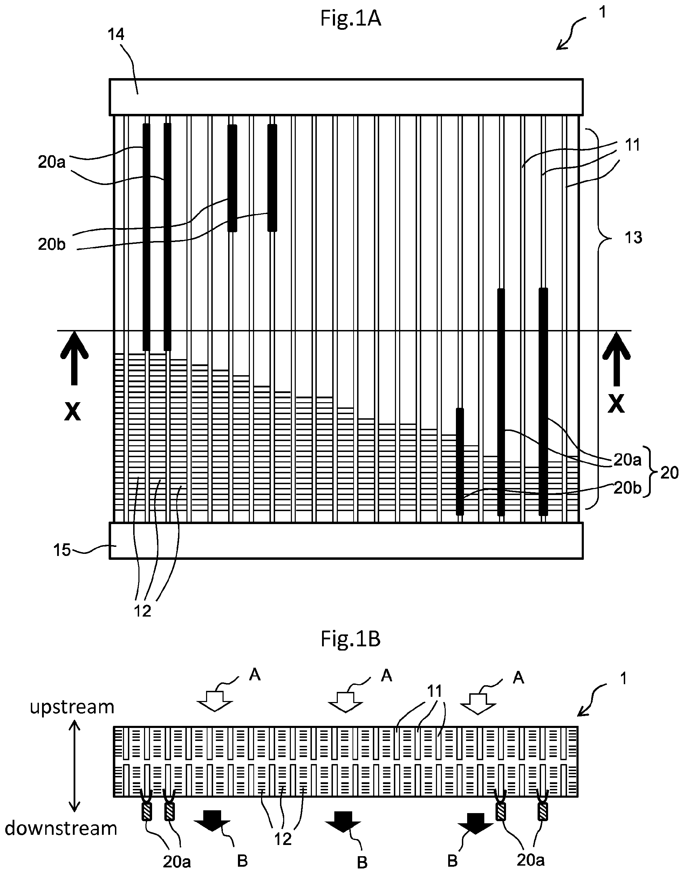

Figs. 1A and 1B show an evaporator for a vehicular air conditioning device according to an embodiment of the present invention, Fig. 1A is a schematic front view, and Fig. 1B is a schematic cross-sectional view taken along a line X-X in Fig. 1A. The evaporator 1 includes an element unit 13 that has a plurality of tubes 11 and a plurality of outer fins 12 which are alternately stacked, and exchanges heat between a refrigerant and air; one tank portion 14 which is provided at one ends in a longitudinal direction of the tubes; another tank portion 15 which is provided at the other ends in the longitudinal direction of the tubes; and a heat storage material container 20 which is attached to the element unit along the longitudinal direction of the tube.

All of the tubes 11, the outer fins 12, the one tank portion 14 and the other tank portion 15 are aluminum alloys and are bonded by a brazing method. A refrigerant which is supplied from a refrigerating cycle (not shown) installed on a vehicle is supplied to the one tank portion 14 or the other tank portion 15, passes through an interior of the tubes 11, and flows out of the refrigerating cycle from the one tank portion 14 or the other tank portion 15. At this time, air A before cooling shown in Fig. 1B flows through the element unit 13, exchanges heat with the refrigerant, and flows out as cooled air B.

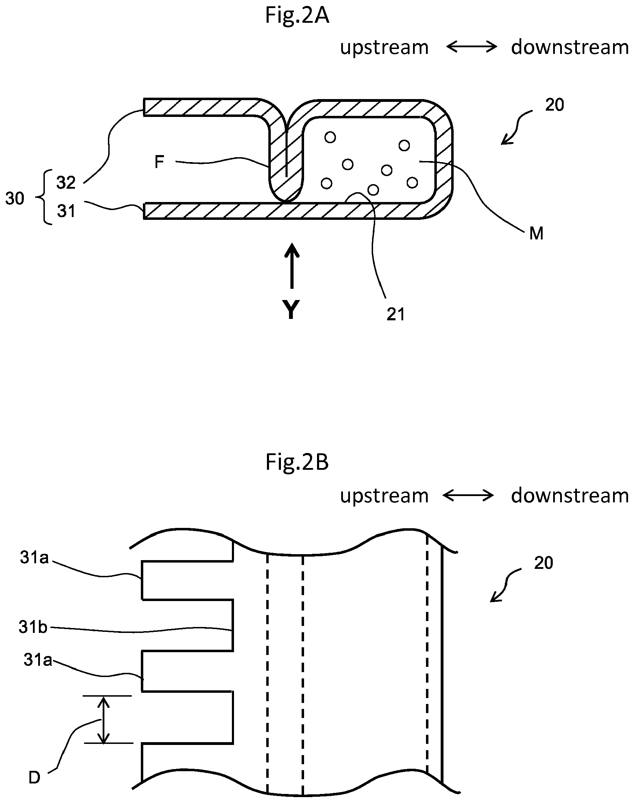

The heat storage material container 20, as shown in Fig. 2A and Fig. 2B, includes a heat storage material containing portion 21, a heat storage material (M) which is contained in the heat storage material containing portion, and an attachment portion (30) for attaching the heat storage material container to the element unit. The heat storage material containing portion 21 and the attachment portion 30 are formed by processing a plate material of aluminum as a base material. First, as shown in Fig. 2B, projection portions31a, 32a and recess portions 31b, 32b are formed on end sides of the base material which will be formed into the attachment portion 30 (one end side 31 of the attachment portion, and the other end side 32 of attachment portion), and flexibility is ensured so as to be suitable for attachment to the element unit 13. Then, a wall portion F is formed by folding a part of the base material, and thus the containing portion 21 which is a tubular space is formed. The heat storage material shows fluidity at room temperature, such as liquid paraffin, and flows in from an end of the containing portion 21 (a front side of the paper in FIG. 2A). Then, the heat storage material is contained in an interior of the containing portion 21 by processing, such as caulking both ends in the longitudinal direction of the containing portion 21, and filling with an adhesive or the like.

The heat storage material container 20, as shown in Fig. 1B, is detachably attached to the element unit 13. The heat storage material container 20 is attached on a downstream side of the element unit 13 in a flow direction of the air. Thus, in the heat storage material container 20, a first heat transfer path which is directed from the element unit 13 to the heat storage material M via the attachment portion 30, and a second heat transfer path which is directed from the cooled air B flowing out from the element unit 13, the base material of the heat storage material container 20, and the heat storage material M are formed, and the heat (cold) of the refrigerant can be effectively transferred to the heat storage material M. Further, since the heat storage material container 20 is attached so as to extend along longitudinal direction of the tube 11 and straddle the tube 11, when the air which flows through the element unit 13 flows out, a downstream side of the outer fin which is an outflow region can be opened and an increase in airflow resistance can be prevented.

Further, as shown in Fig. 2A, a length in a longitudinal direction of the heat storage material container 20 can be set to a desired dimension. This example shows a long heat storage material container 20a and a short heat storage material container 20b. The temperature distribution of the evaporator 1 can be made uniform by attaching the long heat storage material container 20a and the short heat storage material container 20b on positions where temperature rises locally in a case where circulation of the refrigerant of the refrigerating cycle is temporarily stopped.

Further, the base material of the heat storage container 20 is formed of a metal material which has a higher corrosiveness than that of the element unit 13. In a case where condensed water is generated on a surface of the evaporator and corrosion resistance is required, progress of corrosion of the element unit 13 can be prevented by the sacrificial corrosion effect. For example, as compared with the aluminum alloy used for the element unit 13, a material to which a large amount of zinc is be added is used in the aluminum alloy used for the base material of the heat storage material container 20.

The projection portions 31a, 32a of the attachment portion are formed in the longitudinal direction (upper-lower direction of Fig. 2B) at regular intervals D, and the interval D is preferably the same as a fin pitch of the outer fins 12. Damage of the outer fin can be prevented when the heat storage material container 20 is attached to the element unit 13.

The heat storage material container 20 is attached to the evaporator 1 in this manner. Thus, even if the refrigerating cycle is temporarily stopped, the air which flows through the element unit 13 can be continuously cooled by the evaporator 1. That is, when the refrigerating cycle operates, the heat (cold) of the refrigerant is transferred to and accumulated in the heat storage material M which is contained in the heat storage material container 20 via the first heat transfer path and the second heat transfer path. Then, when the refrigerating cycle is temporarily stopped, the flowing air is cooled by transferring the heat (cold) accumulated in the heat storage material M to the element unit 13 via the attachment portion 30.

Further, even if the temperature distribution is non-uniform, the evaporator 1 can cool the flowing air uniformly. That is, at a position of the element unit 13 where the temperature is easy to decrease, the heat (cold) of the refrigerant is transferred to and accumulated in the heat storage material M via the first path and the second path. Meanwhile, at a position of the element unit 13 where the temperature is difficult to decrease, the flowing air is cooled by transferring the heat (cold) accumulated in the heat storage material M to the element unit 13 via the attachment portion 30.

Further, since an attachment location of the heat storage material container 20 can be easily changed, the temperature distribution can be made uniform by arranging the heat storage material container 20 at a suitable position for each of vehicles and air conditioning devices in which the evaporators are installed.

Although the example in which the aluminum alloy is set as the base material of the heat storage material container 20 has been described, the present invention is not limited to this configuration. For example, the base material of the heat storage material container 20 may use a resin material such as polypropylene or ABS. Lightweight can be achieved.

### Industrial Applicability

The vehicular air conditioning device according to the present invention is an industrially applicable invention with economic values since the invention can be industrially manufactured, and can be commercially traded.

### Reference Signs List

- 1: evaporator
- 10: casing
- 11: tube
- 12: outer fin
- 13: element unit
- 14: one tank portion
- 15: another tank portion
- 20: heat storage material container
- 20a: long heat storage material container
- 20b: short heat storage material container
- 21: heat storage material containing portion
- 30: attachment portion
- 31: one end side of the attachment portion
- 31a: projection portion
- 31b: recess portion
- 32: another end edge of the attachment portion
- 32a: projection portion
- 32b: recess portion
- A: air before cooling
- B: cooled air
- D: interval
- F: wall portion
- M: heat storage material
- 100: evaporator
- 111: tube
- 112: outer fin
- 120: heat storage material container

## Claims

1. An evaporator (1) for a vehicular air conditioning device, comprising:
an element unit (13) that has a plurality of tubes (11) and a plurality of outer fins (12) which are alternately stacked and exchanges heat between a refrigerant and air;
one tank portion (14) which is provided at one end in a longitudinal direction of the tubes;
another tank portion (15) which is provided at the other end in the longitudinal direction of the tubes; and
a heat storage material container (20) which is attached to the element unit along the longitudinal direction of the tubes,
wherein the heat storage material container includes
a heat storage material containing portion (21),
a heat storage material (M) which is contained in the heat storage material containing portion, and
an attachment portion (30) which attaches the heat storage material container to the element unit, **characterised in that** the heat storage material container is detachably attached to the element unit.

2. The evaporator according to claim 1, wherein the heat storage material container (20) is attached on a downstream side of the element unit (13) in a flow direction of the air.

3. The evaporator according to claim 1 or claim 2, wherein the heat storage material container (20) is attached on a downstream side of the tube (11) of the element unit (13) in the flow direction of the air.

4. The evaporator according to any one of claims 1 to 3, wherein the heat storage material containing portion and the attachment portion are a material having higher corrosiveness than that of the element unit.

## Patentansprüche

1. Verdampfer (1) für eine Fahrzeugklimatisierungsvorrichtung, umfassend:
eine Elementeinheit (13), die eine Vielzahl von Rohren (11) und eine Vielzahl von Außenrippen (12) aufweist, die abwechselnd übereinander geschichtet sind und Wärme zwischen einem Kältemittel und Luft austauschen;
einen Tankabschnitt (14), der an einem Ende in einer Längsrichtung der Rohre bereitgestellt ist;
einen weiteren Tankabschnitt (15), der am anderen Ende in der Längsrichtung der Rohre bereitgestellt ist; und
einen Wärmespeichermaterialbehälter (20), der entlang der Längsrichtung der Rohre an der Elementeinheit befestigt ist,
wobei der Wärmespeichermaterialbehälter beinhaltet:
einen Wärmespeichermaterial enthaltenden Abschnitt (21), ein Wärmespeichermaterial (M), das in dem Wärmespeichermaterial enthaltenden Abschnitt enthalten ist, und
einen Befestigungsabschnitt (30), der den Wärmespeichermaterialbehälter an der Elementeinheit befestigt, **dadurch gekennzeichnet, dass** der Wärmespeichermaterialbehälter lösbar an der Elementeinheit befestigt ist.

2. Verdampfer nach Anspruch 1, wobei der Wärmespeichermaterialbehälter (20) an einer stromabwärtigen Seite der Elementeinheit (13) in einer Strömungsrichtung der Luft befestigt ist.

3. Verdampfer nach Anspruch 1 oder Anspruch 2, wobei der Wärmespeichermaterialbehälter (20) an einer stromabwärtigen Seite des Rohres (11) der Elementeinheit (13) in der Strömungsrichtung der Luft befestigt ist.

4. Verdampfer nach einem der Ansprüche 1 bis 3, wobei der Wärmespeichermaterial enthaltende Abschnitt und der Befestigungsabschnitt aus einem Material mit höherer Korrosivität als die der Elementeinheit bestehen.

## Revendications

1. Évaporateur (1) pour un dispositif de climatisation de véhicule, comprenant :
une unité élément (13) pourvue d'une pluralité de tubes (11) et d'une pluralité d'ailettes extérieures (12) empilés en alternance et échangeant de la chaleur entre un fluide frigorigène et l'air ;
une partie réservoir (14) placée à une extrémité dans une direction longitudinale des tubes ;
une autre partie réservoir (15) placée à l'autre extrémité dans la direction longitudinale des tubes ; et
un contenant (20) de matériau stockant la chaleur fixé à l'unité élément suivant la direction longitudinale des tubes,
le contenant de matériau stockant la chaleur comportant une partie (21) contenant du matériau stockant la chaleur, un matériau (M) stockant la chaleur contenu dans la partie contenant du matériau stockant la chaleur, et
une partie de fixation (30) qui fixe le contenant de matériau stockant la chaleur sur l'unité élément, **caractérisé en ce que** le contenant de matériau stockant la chaleur est fixé de manière amovible à l'unité élément.

2. Évaporateur selon la revendication 1, dans lequel le contenant (20) de matériau stockant la chaleur est fixé d'un côté aval de l'unité élément (13) dans une direction d'écoulement de l'air.

3. Évaporateur selon la revendication 1 ou la revendication 2, dans lequel le contenant (20) de matériau stockant la chaleur est fixé d'un côté aval du tube (11) de l'unité élément (13) dans la direction d'écoulement de l'air.

4. Évaporateur selon l'une quelconque des revendications 1 à 3, dans lequel la partie contenant du matériau stockant la chaleur et la partie de fixation sont un matériau présentant une corrosivité plus élevée que celle de l'unité élément.
